Europäisches Patentamt

European Patent Office

Office européen des brevets

(19)

(11) Veröffentlichungsnummer : **0 110 090**
**B1**

(12)

# EUROPÄISCHE PATENTSCHRIFT

(45) Veröffentlichungstag der Patentschrift :
21.01.87

(21) Anmeldenummer : 83110351.0

(22) Anmeldetag : 17.10.83

(51) Int. Cl.⁴ : **G 21 C 3/32**, **F 16 L 41/08**,
**F 16 B 41/00**

(54) Kernreaktorbrennelement.

(30) Priorität : 28.10.82 DE 3240061

(43) Veröffentlichungstag der Anmeldung :
13.06.84 Patentblatt 84/24

(45) Bekanntmachung des Hinweises auf die Patenterteilung : 21.01.87 Patentblatt 87/04

(84) Benannte Vertragsstaaten :
BE DE FR SE

(56) Entgegenhaltungen :
EP-A- 0 041 014
DE-A- 2 217 490
DE-A- 2 734 981
FR-A- 1 375 579
FR-A- 2 159 800
FR-A- 2 341 917
US-A- 4 030 975
US-A- 4 219 386

(73) Patentinhaber : KRAFTWERK UNION AKTIENGE-
SELLSCHAFT
Wiesenstrasse 35
D-4330 Mülheim (Ruhr) (DE)

(72) Erfinder : Steinke, Alexander
Stettinerstrasse 13
D-8553 Ebermannstadt (DE)

(74) Vertreter : Mehl, Ernst, Dipl.-Ing. et al
Postfach 22 01 76
D-8000 München 22 (DE)

## Beschreibung

Die Erfindung betrifft ein Kernreaktorbrennelement nach dem Gattungsbegriff des Patentanspruchs 1.

Ein solches Kernreaktorbrennelement ist aus DE-A-2 734 981 bekannt. Sein Haltestab ist an der Innenseite der einen der beiden Halteplatten mit einem starren, am Haltestab-festgeschweißten, Stützkörper für diese Halteplatte versehen. Der Haltestab ist an dieser Halteplatte dadurch gehaltert, daß an der Außenseite dieser Halteplatte auf das durch die Durchführung greifende, mit einem Außengewinde versehene Ende des Haltestabes der Haltekörper aufgeschraubt ist.

Es ist jedoch häufig erforderlich, diese Halteplatte wieder vom Haltestab zu lösen, um Kernbrennstoff enthaltende Brennstäbe, die parallel zum Haltestab zwischen den beiden Halteplatten angeordnet und jeweils in einer Masche von Abstandshaltergittern geführt sind, beispielsweise zum Zwecke der Reparatur, des Ersetzens oder der Inspektion, aus dem Kernreaktorbrennelement aus- bzw. in das Kernreaktorbrennelement einzubauen.

Insbesondere wenn sich das Kernreaktorbrennelement in einem in Betrieb befindlichen Kernreaktor befunden hat, muß es als bestrahltes Kernreaktorbrennelement zum Aus-bzw. Einbau von Brennstäben unter Wasser angeordnet werden. Ein Montieren an diesem unter Wasser angeordneten bestrahlten Brennelement kann wegen der von ihm ausgehenden radioaktiven Strahlung nur mit fernbedienten Werkzeugen erfolgen. Für eine solche Unterwassermontage mit fernbedienten Werkzeugen sind jedoch auf Stabenden aufgeschraubte Habtekörper nur schlecht geeignet, da sie während der Standzeit des Kernreaktorbrennelementes im Kernreaktor schwergängig geworden sind und nach dem Lösen von den Enden des Haltestabes im Becken, in dem die Unterwassermontage erfolgt, verloren gehen können.

Der Erfindung liegt die Aufgabe zugrunde, ein Kernreaktorbrennelement zu schaffen, dessen Metall Haltestäbe von den Halteplatten auch dann noch leichtgängig unter Wasser mit einem fernbedienbarem Werkzeug ohne Gefahr des Verlustes von Verbindungsteilen gelöst werden kann, wenn dieses Kernreaktorbrennelement in einem in Betrieb befindlichen Kernreaktor angeordnet war.

Zur Lösung dieser Aufgabe hat ein Kernreaktorbrennelement der eingangs erwähnten Art erfindungsgemäß die Merkmale des kennzeichnenden Teiles des Patentanspruchs 1.

Der langgestreckte Haltekörper kann in der Durchführung unverlierbar angeordnet sein. Ihm kann ein zu einem fernbedienten Einfachspindelwerkzeug gehörender Schlüssel zugeordnet sein, mit dem er um seine Längsachse zum Herstellen bzw. Lösen der starren Verbindung mit dem Haltestab gedreht werden kann. Der Druck, mit dem das Federelement den Haltekörper elastisch gegen die Halteschulter preßt, sichert durch Reibschluß zwischen dem Haltekörper und der Halteschulter den Haltekörper gegen eine Relativdrehung um seine Längsachse bezüglich der Halteplatte und damit die starre Verbindung zwischen dem Haltekörper und dem Haltestab gegen ein selbsttätiges Lösen.

Montage und Demontage des Kernreaktorbrennelementes wird in vorteilhafter Weise erleichtert, wenn das Ende des Haltestabes an der Durchführung gegen eine Relativdrehung um die Längsachse bezüglich der Halteplatte gesichert ist.

Ferner ist es günstig, wenn der Haltekörper zylinderförmig ist und ein Außengewinde aufweist zum Aufschrauben des hülsenförmig ausgebildeten Endes des Haltestabes, das mit einem Innengewinde versehen ist. Hierdurch ist auch dann eine einwandfreie Wiedermontage eines bestrahlten Kernreaktorbrennelementes gewährleistet, wenn dieses bestrahlte Kernreaktorbrennelement mehrere Haltestäbe an den beiden Halteplatten aufweist, die nach der Demontage einer der Halteplatten durch unterschiedliche Relaxation der im Kernreaktor aufgebauten Materialspannungen schließlich unterschiedliche Längen haben.

Die Erfindung und ihre Vorteile seien anhand der Zeichnung an einem Ausführungsbeispiel näher erläutert:

Figur 1 zeigt in Seitenansicht und stark schematisiert ein Kernreaktorbrennelement für einen Druckwasserkernreaktor.

Figur 2 zeigt im Längsschnitt das Stabende eines Haltestabes und einen Ausschnitt aus einer der beiden Halteplatten des Kernreaktorbrennelementes nach Fig. 1.

Figur 3 zeigt eine Untersicht auf in Fig. 2 dargestellte Kernreaktorbrennelementteile.

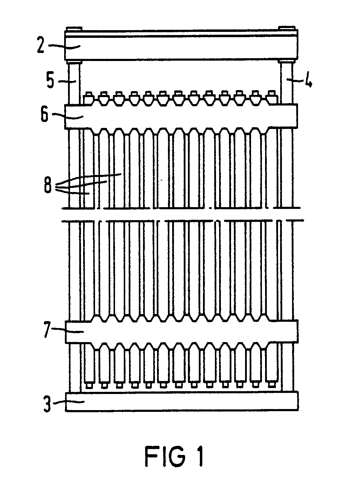

Das Kernreaktorbrennelement nach Fig. 1 ist für einen Druckwasserkernreaktor bestimmt und weist zwei Halteplatten 2 und 3 aus Metall auf. Ferner sind zwei Haltestäbe 4 und 5 aus Metall erkennbar, deren Längsachsen die beiden zueinander parallelen Halteplatten 2 und 3 unter einem Winkel von 90° durchdringen und die an jedem Ende jeweils an einer der beiden Halteplatten 2 und 3 gehaltert sind. Jeder der beiden Haltestäbe 4 und 5 ist durch eine Masche in Abstandshaltergittern aus Metall geführt, die sich in Längsrichtung der Haltestäbe 4 und 5 gesehen zwischen den beiden Halteplatten 2 und 3 befinden, an den Haltestäben 4 und 5 gehaltert und von denen zwei Abstandshaltergitter 6 und 7 in Fig. 1 dargestellt sind. Durch andere Maschen der Abstandshaltergitter 6 und 7 ist jeweils ein Brennstab 8 geführt, der im wesentlichen aus einem mit Kernbrennstoff gefüllten Hüllrohr aus Metall besteht, das an beiden Enden gasdicht verschlossen ist. Die Brennstäbe 8 sind an keiner der beiden Halteplatten 2 und 3 befestigt, sondern sie sind in den Maschen der Abstandshaltergitter elastisch gehaltert und haben zwischen den beiden Halteplatten 2 und 3 in Richtung ihrer Längsachse Spiel. Sie können sich deshalb in axialer Richtung d. h. in Längsrichtung des Kernreaktorbrennelementes 2 ungehindert ausdehnen.

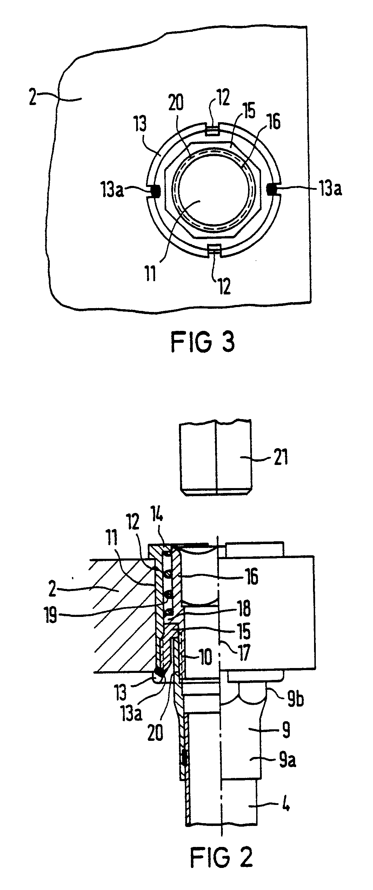

Am oberen Stabende weist beispielsweise der in Fig. 2 dargestellte rohrförmige Haltestab 4 des Kernreaktorbrennelementes nach Fig. 1 eine Hülse 9 auf, die an einem Ende 9a auf dem Haltestab 4 sitzt und mit diesem durch Punktschweißung toleranz- und spannungsfrei fest verbunden ist. Am anderen Ende weist die Hülse 9 ein Innengewinde 10 und einen Querschnitt mit eckiger Außenkontur z. B. den Querschnitt eines regelmäßigen Achtkants, auf.

In der Halteplatte 2 ist für das Stabende des Haltestabes 4 eine Durchführung 11 vorgesehen, in die auf der Außenseite der Halteplatte 2 eine Hülse 12 mit einem an dieser Außenseite anliegenden Außenflansch eingesteckt und auf der Innenseite der Halteplatte 2 eine Hülse 13 mit einem an dieser Innenseite anliegenden Außenflansch in die Hülse 12 eingeschraubt ist. Beide Hülsen 12 und 13 sind zusätzlich mit der Innenseite der Halteplatte 2 an den Schweißstellen 13a verschweißt und so gegen Verdrehen gesichert.

Innen bildet die Hülse 12 an der Außenseite der Halteplatte 2 eine ringförmige, koaxiale Anschlagschulter 14 in der Durchführung 11, während die Hülse 13 innen und damit innerhalb der Durchführung 11 eine ringförmige koaxiale Halteschulter 15 mit Abstand in axialer Richtung von der Anschlagschulter 14 zwischen dieser Anschlagschulter 14 und der Innenseite der Halteplatte 2 bildet.

In der Durchführung 11 ist ferner ein langgestreckter Haltekörper 16 geführt, der um seine Längsachse 17 drehbar und in Richtung dieser Längsachse 17 verschiebbar ist. Dieser Haltekörper 16 besteht aus einem zur Durchführung 11 koaxialen Hohlzylinder, dessen äußere Mantelfläche mit einer Schulter 18 in Form eines zum Haltekörper 16 koaxialen Ringes versehen ist. Diese Schulter 18 befindet sich zwischen der Anschlagschulter 14 und der ringförmigen Halteschulter 15, so daß der Haltekörper 16 unverlierbar in der Durchführung 11 angeordnet ist.

Auf dem Haltekörper 16 ist außen eine zum Haltekörper 16 koaxiale Schrauben-Druckfeder 19 aufgesetzt, die sich mit einem Ende an der Anschlagschulter 14 der Hülse 12 und mit dem anderen Ende an der Schulter 18 des Haltekörpers 16 abstützt.

Der Haltekörper 16 weist an dem Ende, das sich in der Durchführung 11 an der Innenseite der Platte 2 befindet, ein Außengewinde 20 auf, das dem Innengewinde 10 in der Hülse 9 angepaßt ist. Ferner ist die Hülse 13 an der Innenfläche mit einem eckigen Querschnitt versehen, der der eckigen Außenkontur des Querschnittes am Ende 9b der Hülse 9 am Haltestab 4 angepaßt ist d. h. die Außenkontur eines regelmäßigen Achtkants hat.

Auch die hohlzylinderförmige Hülse, aus der

der Haltekörper 16 besteht, hat an dem Ende, das sich an der Oberseite der Platte 2 befindet, als Innenquerschnitt den Querschnitt eines regelmäßigen Sechskants, der dem Außenquerschnitt eines dem Haltekörper 16 zugeordneten, fernbedienten Schlüssels 21 angepaßt ist.

Zur Befestigung des Haltestabes 4 an der Halteplatte 2 wird das Ende 9b der Hülse 9 am Haltestab 4 an das Ende des Haltekörpers 16 an der Innenseite der Halteplatte 2 angesetzt. Sodann wird der Haltekörper 16 mit Hilfe des an der Außenseite der Halteplatte 2 in ihn eingesetzten Schlüssels 21 um die Längsachse 17 gedreht. Hierbei wird das Innengewinde 10 in der Hülse 9 auf das Außengewinde 20 am Haltekörper 16 aufgeschraubt und die am Haltestab 4 starr befestigte Hülse 9 mit dem Haltekörper 16 verschraubt, bis die Schulter 18 außen an dem Haltekörper 16 mit der Halteschulter 15 verspannt ist, die sich innerhalb der Durchführung 11 zwischen der Anschlagschulter 14 und der anderen Halteplatte 3 befindet. Hierbei verhindert die der Außenkontur der Hülse 9 am Ende 9b angepaßte Innenkontur der Hülse 13, daß die in die Durchführung 11 greifende Hülse 9 und damit der Haltestab 4 um ihre in die gemeinsame Längsachse 17 von Durchführung 11 und Haltekörper 16 fallende Längsachse mitgedreht werden.

Je nach ihrer Länge werden die Haltestäbe 4 und 5 hierbei verschieden hoch auf den Haltekörper 16 aufgeschraubt. Durch den Druck, mit dem die Schraubenfeder 19 die Schulter 18 zusätzlich gegen die Halteschulter 15 in Axialrichtung preßt, bildet sich ein Reibschluß zwischen der Schulter 18 und der Halteschulter 15, der den festen Sitz der Schraubverbindung zwischen der Halteplatte 2 und dem Haltestab 4 gewährleistet.

Mit Hilfe des Schlüssels 21 kann dieser Reibschluß auch wieder überwunden werden, wenn das Kernreaktorbrennelement nach dem Einsatz in einem in Betrieb befindlichen Kernreaktor wieder demontiert und der Haltestab 4 von der Halteplatte 2 durch Lösen der Schraubverbindung zwischen dem Haltekörper 16 und der Hülse 9 getrennt werden soll.

**Patentansprüche**

1. Kernreaktorbrennelement mit zwei Halteplatten und einem beide Halteplatten starr mit Abstand voneinander verbindenden Haltestab, dessen Längsachse beide' Halteplatten durchdringt und der an einem Ende in einer Durchführung in einer der beiden Halteplatten mit einem langestreckten Haltekörper gehaltert ist, der durch eine Relativdrehung um seine Längsachse bezüglich des Haltestabes mit dem Ende dieses Haltestabes starr verbindbar bzw. vom Haltestab lösbar ist, dadurch gekennzeichnet, daß der langgestreckte Haltekörper (16) für den Haltestab (4) um seine Längsachse (17) drehbar und in Richtung seiner Längsachse (17) verschiebbar koaxial zur Durchführung (11) in dieser Durchführung (11) geführt ist, daß der Haltekörper (16) durch die ihn mit dem Haltestab verbindende Relativdrehung gegen eine Halteschulter (15) an der Halteplatte (2), vorzugsweise innerhalb der Durchführung (11), verspannbar ist und daß dem Haltekörper (16) ein an der Halteplatte (2) abgestütztes Federelement (19) zugeordnet ist, das diesen Haltekörper (16) elastisch gegen die Halteschulter (15) preßt.

2. Kernreaktorbrennelement nach Anspruch 1, dadurch gekennzeichnet, daß das Ende des Haltestabes (4) an der Durchführung (11) gegen eine Relativdrehung um die Längsachse (17) bezüglich der Halteplatte (2) gesichert ist.

3. Kernreaktorbrennelement nach Anspruch 1, dadurch gekennzeichnet, daß der Haltekörper (16) zylinderförmig ist und ein Außengewinde (20) aufweist zum Aufschrauben des hülsenförmig ausgebildeten Endes des Haltestabes (4), das mit einem Innengewinde (10) versehen ist.

4. Kernreaktorbrennelement nach Anspruch 2 und 3, dadurch gekennzeichnet, daß das Ende des Haltestabes (4) einen Querschnitt mit eckiger Außenkontur hat und in die Durchführung (11) greift, die mit einem angepaßten eckigen Querschnitt zur Sicherung des Haltestabes (4) gegen die Relativdrehung versehen ist.

5. Kernreaktorbrennelement nach Anspruch 1, dadurch gekennzeichnet, daß an der Halteplatte (2) in Achsrichtung der Durchführung (11) gesehen mit Abstand von der Halteschulter (15) eine Anschlagschulter (14) für den Haltekörper (16) angeordnet ist.

6. Kernreaktorbrennelement nach Anspruch 5, dadurch gekennzeichnet, daß sich die Halteschulter (15) in Richtung der Längsachse (17) des Haltestabes (4) gesehen zwischen der Anschlagschulter (14) und der anderen (3) der beiden Halteplatten (2) und (3) befindet.

7. Kernreaktorbrennelement nach Anspruch 6, dadurch gekennzeichnet, daß das Federelement (19) eine außen auf dem Haltekörper (16) sitzende, zu diesem koaxiale Schrauben-Druckfeder ist, die sich an der Anschlagschulter (14) und an einer Schulter (15) außen am Haltekörper (16) abstützt.

## Claims

1. A nuclear reactor fuel element comprising two supporting plates and a supporting rod which rigidly connects the two supporting plates at a distance from one another and whose longitudinal axis penetrates both supporting plates and which at the one end is supported in an aperture in one of the two supporting plates by means of an elongated supporting body which can be rigidly connected to the end of said supporting rod or detached from said supporting rod by means of a relative rotation about its longitudinal axis in relation to the supporting rod, characterised in that the elongated supporting body (16) for the supporting rod (4) is rotatable about its longitudinal axis (17) and is guided in the direction of its longitudinal axis (17) within the aperture (11) so as to be displaceable coaxially with said aperture (11), that said supporting body (16) can be braced against a supporting shoulder (15) of the supporting plate (2), preferably within the aperture (11) by means of rotation of the supporting body (16) relative to the supporting rod and that the supporting body (16) is assigned a spring element (19) which is supported on the supporting plate (2) and which elastically presses said supporting body (16) against the supporting shoulder (15).

2. A nuclear reactor fuel element as claimed in claim 1, characterised in that the end of the supporting rod (4) adjacent the aperture (11) is secured against a rotation about the longitudinal axis (17) relative to the supporting plate (2).

3. A nuclear reactor fuel element as claimed in claim 1, characterised in that the supporting body (16) is cylindrical and has an external thread (20) for screwing-on the sleeve-like end of the supporting rod (4), which is provided with an internal thread (10).

4. A nuclear reactor fuel element as claimed in claims 2 and 3, characterised in that the end of the supporting rod (4) has a cross-section with an angular outer contour and engages into the aperture (11) which is provided with a corresponding cross-section in order to secure the supporting rod (4) against the relative rotation.

5. A nuclear reactor fuel element as claimed in claim 1, characterised in that viewed in the axial direction of the aperture (11), a stop shoulder (14) for the supporting body (16) is arranged on the supporting plate (2) at a distance to the supporting shoulder (15).

6. A nuclear reactor fuel element as claimed in claim 5, characterised in that viewed in the direction of the longitudinal axis (17) of the supporting rod (4) the supporting shoulder (15) is arranged between the stop shoulder (14) and the other (3) of the two supporting plates (2) and (3).

7. A nuclear reactor fuel element as claimed in claim 6, characterised in that the spring element (19) is a helical compression spring which is externally mounted on the supporting body (16) and which is supported on the stop shoulder (14) and on a shoulder (15) outside the supporting body (16).

## Revendications

1. Assemblage combustible de réacteur nucléaire, comprenant deux plaques de maintien et une barre de maintien, qui relie les deux plaques de maintien en les maintenant solidement à distance l'une de l'autre, dont l'axe longitudinal traverse les deux plaques de maintien et dont l'une des extrémités est maintenue dans un passage ménagé dans l'une des deux plaques de maintien, par une pièce oblongue de maintien qui peut être reliée rigidement à cette barre de maintien ou qui peut en être détachée par un mouvement relatif de rotation autour de son axe longitudinal par rapport à la barre de maintien, caractérisé en ce que la pièce oblongue de maintien (16) de la barre de maintien (4) est guidée dans le passage (17), coaxialement à celui-ci, de manière à pouvoir tourner autour de son axe longitudinal (17) et de manière à pouvoir coulisser dans la direction de son axe longitudinal (17), en ce que la pièce de maintien peut être bloquée, de préférence à l'intérieur du passage (11), contre un épaulement de maintien (15) de la plaque de maintien (2), par la rotation relative faisant qu'elle est reliée à la barre de maintien et en ce qu'à la pièce de maintien (16) est associé un élément à ressort (19) s'appuyant sur la plaque de maintien (2) et repoussant élastiquement cette pièce de maintien (16) contre l'épaulement de maintien (15).

2. Assemblage combustible de réacteur nucléaire suivant la revendication 1, caractérisé en ce que l'extrémité de la barre de maintien (4) est empêchée, dans le passage (11), d'effectuer une rotation relative autour de l'axe longitudinal (17), par rapport à la plaque de maintien (2).

3. Assemblage combustible de réacteur nucléaire suivant la revendication 1, caractérisé en ce que la pièce de maintien (16) est cylindrique et présente un filetage (20) pour le vissage de l'extrémité de la pièce de maintien (4), qui est agencée en forme de douille et qui est munie d'un taraudage (10).

4. Assemblage combustible de réacteur nucléaire suivant les revendications 2 et 3, caractérisé en ce que l'extrémité de la barre de maintien (4) a une section transversale à contour extérieur polygonale et pénètre dans le passage (11) qui est muni d'une section transversale polygonale agencée de manière à empêcher la barre de maintien (4) d'effectuer une rotation relative.

5. Assemblage combustible de réacteur nucléaire suivant la revendication 1, caractérisé en ce que, sur la plaque de maintien (2), est disposé, à distance de l'épaulement de maintien (4) considéré suivant la direction axiale du passage (11), un épaulement de butée (14) pour la pièce de maintien (16).

6. Assemblage combustible de réacteur nucléaire suivant la revendication 5, caractérisé en ce que l'épaulement de maintien (15) se trouve, considéré suivant la direction de l'axe longitudinal (17) de la barre de maintien (4), entre l'épaulement de butée (14) et l'autre (3) des deux plaques de maintien (2) et (3).

7. Assemblage combustible de réacteur nucléaire suivant la revendication 6, caractérisé en ce que l'élément à ressort (19) est un ressort hélicoïdal de pression, enfilé sur la pièce de maintien (16) coaxialement à celle-ci, et qui s'appuie sur l'épaulement de butée (14) et sur un épaulement (15) à l'extérieur de la pièce de maintien (16).

FIG 1

FIG 3

FIG 2